# EUROPEAN PATENT APPLICATION

(11) **EP 2 494 864 A1**
(43) Date of publication of application: **05.09.2012**
(21) Application number: 12157890.0
(22) Date of filing: 02.03.2012
(51) Int. Cl.: A01K 1/015, A01K 1/01

(54) **Stable with a manure storage**

(30) Priority: 04.03.2011 NL 2006339
(71) Applicant: G. van Beek & Zn. Kalverstalinrichting B.V., 3771 MK Barneveld (NL)
(72) Inventor: van Beek, Geurt Gerardus, 3771 MK Barneveld (NL)
(74) Representative: van Essen, Peter Augustinus

(57) **Abstract**

The invention relates to a stable comprising a manure storage, a walk-on floor provided with passages for manure and urine, and below the walk-on floor a bottom floor comprising a series of concrete floor parts and with a top surface at a fall, and a concrete discharge channel having side walls and a discharge channel bottom at a fall, wherein the series of floor parts with an edge connect to side walls of the discharge channel so that on either side of the discharge channel floor parts at a fall slope down to the discharge channel, wherein the fall of the discharge channel is transverse to the fall of the floor parts, wherein the discharge channel ends in a reservoir for a thin fraction of the manure that has been separated from the manure storage, wherein at a longitudinal side, transverse to the discharge channel, the bottom floor provides a passage for the solid fraction of the manure and its collection in the manure storage, and wherein the stable is furthermore provided with a manure scraper for shoving the manure over the floor parts towards the passage and into the manure storage.

## Description

### BACKGROUND OF THE INVENTION

The invention relates to a stable, particularly a livestock stable for instance for calves, but also other livestock traditionally housed on grids such as cattle and pigs.

A stable, particularly including a manure cellar below the walk-on floor of a livestock stable is generally known. Usually grids are provided over such manure cellars so that manure and urine can freely drain into the manure cellar. Such a grid is for instance known from NL2004490 and NL2004491.

It is known that in such a manure cellar a mixture of faeces and urine results in the development of ammonia. It particularly turned out that a contact time of 2 hours already results in considerable ammonia development.

Therefore there is room for improvement on these stables that have been known per se for a long time.

### SUMMARY OF THE INVENTION

It is an object of the invention to provide improved livestock housing equipment.

It is a further or additional object of the invention to improve the living conditions of the calves.

It is a further or additional object of the invention to provide an improved stable or stable with manure storage or stable including manure cellar.

It is a further or additional object of the invention to provide an improved manure cellar in which manure and urine of livestock are separated from each other at an early stage, and/or to discharge the manure and urine out of the stable as soon as possible, away from the livestock.

For that purpose the invention provides a stable comprising a manure storage, a walk-on floor provided with passages for manure and urine, and below the walk-on floor a bottom floor comprising a series of concrete floor parts and with a top surface at a fall, and a concrete discharge channel having side walls and a discharge channel bottom at a fall, wherein the series of floor parts with an edge connect to side walls of the discharge channel so that on either side of the discharge channel floor parts at a fall slope down to the discharge channel, wherein the fall of the discharge channel is transverse to the fall of the floor parts. The discharge channel ends in a reservoir for a thin fraction of the manure that has been separated from the manure storage. In that way for instance urine can easily be separated. At a longitudinal side, transverse to the discharge channel, the bottom floor comprises a passage for the solid fraction of the manure and its collection in the manure storage. The stable is furthermore provided with a manure scraper for shoving the manure over the floor parts towards the passage and into the manure storage. In that way mucking out can be automated.

Due to the selected stable it is possible to easily separate solid and liquid manure, such as separating urine and solid manure. Moreover keeping a stable clean is not laborious anymore, mucking out is almost automatic or is easy to automate. The manure can also be taken away from the livestock more quickly.

In one embodiment the manure storage comprises a manure cellar. In that way storage hardly takes up space. Optionally the manure cellar can be connected to a biofermentation installation. In one embodiment the manure cellar is a biofermentation installation.

In one embodiment the walk-on floor is provided at least partially over the manure cellar. When the floor parts are liquidproof and preferably to a high degree, most preferably almost fully vapourproof, the livestock that stands above it is no longer troubled by the manure.

In one embodiment the floor parts at least partially form a ceiling for the manure cellar. In that way the manure cellar is easy to realise.

In one embodiment, for instance transverse to the discharge channel, at least one of the floor parts or a space between two floor parts provides a passage for the solid fraction of the manure and its collection in the manure cellar. In one embodiment the liquidproof bottom floor formed by the floor parts has such a passage, for instance at a head end.

In one embodiment the invention regards a stable comprising a manure cellar, a walk-on floor provided with passages for manure and urine over the manure cellar, and below the walk-on floor a series of concrete floor parts and with a top surface at a fall, and which at least partially form a ceiling for the manure cellar, and a concrete discharge channel with side walls and a discharge channel bottom at a fall, wherein the series of floor parts with an edge connect to side walls of the discharge channel so that on either side of the discharge channel floor parts at a fall slope down to the discharge channel and the fall of the discharge channel is transverse to the fall of the floor parts, wherein the discharge channel ends in a reservoir for a thin fraction of the manure, wherein at a longitudinal side, transverse to the discharge channel, at least one of the floor parts or a space between two floor parts provide a passage for the solid fraction of the manure and its collection in the manure cellar, and wherein the stable is provided with a manure scraper for shoving the manure over the floor parts towards the passage and into the manure cellar.

One effect of this invention may among other things be a reduction of the ammonia emission. In addition the invention may reduce the energy consumption the ultimate goal being energy neutral building. The lifespan of this invention may also be longer than that of the current systems. Finally it is also a point of particular interest that the system can be produced and processed in accordance with health and safety regulations.

Due to the floor parts of a closed and resistant top layer and at a slight fall, urine drains away from the manure. A fall of as much as 2% suffices. The quick separation of urine from the manure results in a considerably reduced ammonia emission. Moreover the separated manure proved to be capable of being processed better. It namely turned out that with a contact time of more than 2 hours considerable ammonia development arises. By also laying the stable floor at a fall of 1 % further separation can be achieved. Livestock such as calves and cows namely proved to be hindered hardly at all by such a fall. The floor parts in one embodiment form an intermediate floor over the actual manure cellar.

Further embodiments of the manure cellar and its various parts, as well as their particular way of manufacturing are described in the dependent claims and in the description of the embodiments.

In one embodiment the floor parts comprise a first and second series of floor parts of prefab self-sealing concrete with, when in use, a substantially level lower side and a top surface at a fall with respect to the lower side.

In one embodiment the fall of the floor parts is 1-5 degrees. In one embodiment the fall is particularly 1-3 degrees. In one embodiment specifically 1.5-2.5 degrees.

In one embodiment the discharge channel is made of prefab self-sealing concrete having side walls, a lower side and a discharge channel bottom at a fall with respect to the lower side.

In one embodiment the fall of the channel bottom is 0.3-1.0%. In one embodiment the fall is particularly 0.4-0.6%.

In one embodiment the stable comprises a reservoir for liquid manure, often mainly the urine, and a manure storage for the (more) solid fraction. These two have been separated. In one embodiment interior space for the livestock, and the reservoir and the manure storage are hermetically closed off from the interior space. In an alternative or additional embodiment the stable has a stable wall bounding the interior space, and the reservoir and the manure storage are outside of the stable wall. In that way the livestock is even less troubled by the manure.

The invention further relates to a stable comprising a first and second series of floor parts of prefab self-sealing concrete with, when in use, a substantially level lower side and a top surface at a fall with respect to the lower side, and a discharge channel of prefab self-sealing concrete with side walls and a discharge channel bottom at a fall, wherein the series of floor parts with an edge connect to side walls of the discharge channel so that on either side of the discharge channel floor parts at a fall slope down to the discharge channel and the fall of the discharge channel is transverse to the fall of the floor parts.

Due to the level lower bottom and the top surfaces and discharge channel bottom, respectively, at a fall with respect to the lower sides, positioning is very easy. Particularly as the falls are very small, positioning the various parts proved to be complex. Now the various parts can easily be positioned straight and level, and without further positioning, the floor parts and the discharge channel can be arranged on it.

In one embodiment the fall of the floor parts is 1-5 degrees. In a further embodiment the fall is 1-3 degrees. The fall specifically is 1.5-2.5 degrees. In that way it turned out that the liquid fraction of the manure could be properly separated from the solid fraction.

In one embodiment the fall of the channel bottom is 0.3-1.0%. In particular the fall is 0.4-0.6%. The liquid fraction still appeared to be sufficiently quick to drain away to a separate storage and separated from the solid fraction. Particularly the manure cellar for the liquid fraction is separated from the manure cellar for the solid fraction. In that way the liquid fraction can also be stored from the discharge channel into a closed-off reservoir or a closed-off tank in liquid connection with the discharge channel. In that way evaporation is prevented as much as possible.

In one embodiment at least two concrete channel parts connecting to the head end form a continuous channel at a fall. In that case the channel parts have a length of at least 10 metres. In one embodiment the channel parts have a connecting, continuous lower side. In that way at least two separate channel parts of 5 metres each can be provided, each having a channel bottom at a fall. By providing the level bottom with a different bottom thickness, said channel parts can connect wherein the channel bottom has a continuous channel bottom at a fall, and a level continuous lower side.

In one embodiment the floor parts are 7-20 meters long by 1-5 meters wide. In that way they can be supplied by road.

In one embodiment the discharge channel parts are 9-20 metres long. In that way they can be supplied by means of relatively standard road transport.

In one embodiment the discharge channel has an inner width of 8-20 cm. It turned out that this provides a discharge capacity that is sufficient yet quick enough.

In one embodiment the discharge channel ends in a reservoir for a thin fraction of the manure. In one embodiment the bottom floor, particularly at least one of the floor parts, or a space between two consecutive floor parts, at a longitudinal side provides a passage for the solid fraction of the manure and its collection in a manure cellar. In a simple way a limited, in one embodiment a closable passage can be provided for the solid manure. In that way a passage can be provided at a head end of the bottom floor.

In one embodiment the floor parts are arranged between a stand-on floor and the bottom of the manure cellar. In a further embodiment the floor parts form a ceiling of the manure cellar.

The invention further relates to a floor part, particularly a floor part intended and suitable for the manure cellar according to this description, comprising a concrete slab having a length of at least 9 metres, a width of at least 1 metre, a substantially level lower side, an opposite upper side at a fall of 1-4 degrees with respect to the lower side, and wherein at least the upper side is provided with a layer of B65 concrete.

The invention furthermore relates to a discharge channel, particularly a discharge channel intended and suitable for a manure cellar according to this description, comprising at least two concrete channel parts connecting to the head end and forming a continuous channel at a fall and having a length of at least 10 metres, and wherein the channel parts have a connected, continuous lower side.

In one embodiment the channel thereof has a fall of between 0.2 and 2%. In one embodiment the channel thereof has a fall of between 0.4 and 1 %. The invention further relates to a stable comprising a manure cellar, a walk-on floor provided with passages for manure and urine over the manure cellar, and below the walk-on floor a series of concrete floor parts and with a top surface at a fall and which at least partially form a ceiling for the manure cellar, and a concrete discharge channel having side walls and a discharge channel bottom at a fall, wherein the series of floor parts with an edge connect to side walls of the discharge channel so that on either side of the discharge channel floor parts at a fall slope down to the discharge channel and the fall of the discharge channel is transverse to the fall of the floor parts, wherein the discharge channel ends in a reservoir for a thin fraction of the manure, wherein at a longitudinal side, transverse to the discharge channel, at least one of the floor parts or a space between two floor parts provides a passage for the solid fraction of the manure and its collection in the manure cellar, and wherein the manure cellar is provided with a manure scraper for shoving the manure over the floor parts towards the passage.

The invention further relates to a stable comprising:
- a manure storage, a walk-on floor provided with passages, such as a grid floor, for manure and urine,
- below the walk-on floor a liquidproof concrete construction floor and with a top surface at a fall, and a concrete discharge channel with side walls and a discharge channel bottom at a fall, wherein the liquidproof construction floor connects to side walls of the discharge channel so that on either side of the discharge channel the liquidproof construction floor at a fall slopes down to the discharge channel and the fall of the discharge channel is transverse to the fall of the liquidproof construction floor, wherein the discharge channel ends in a reservoir for a thin fraction of the manure, and wherein the liquidproof construction floor provides a passage for the solid fraction of the manure and its collection in a manure storage, and wherein the stable is provided with a manure scraper for shoving the manure over the liquidproof construction floor towards the passage.

In one embodiment the passage is at a longitudinal side of the liquidproof construction floor. In one embodiment the passage is transverse to the discharge channel.

This stable has to be poured on location, in situ. The advantage of the easy separation of the thin and thick fraction, or the urine and the more (solid) manure remains.

The invention furthermore relates to a device or a method provided with one or more of the characterising measures described in the attached description and/or shown in the attached drawings.

It will be clear that the various aspects mentioned in this patent application can be combined and each individually may be eligible for a divisional patent application.

### SHORT DESCRIPTION OF THE DRAWINGS

In the attached figures an embodiment is shown of livestock housing equipment, a manure cellar and prefab concrete floor parts, in which:
Figure 1 shows a cross-section of a longitudinal section of a floor part and a cross-section of a discharge channel;
Figure 2 shows a side view of figure 1;
Figure 3 shows a top view of a calves' stable provided with the floor parts of figure 1 and with a grid (stand-on) floor;
Figure 4 shows a cross-section of figure 3;
Figure 5 shows a view in perspective of an embodiment of a stable in which each time a part of the floor layers has been cut away, and
Figure 6 shows a view in perspective of the manure cellar of a stable.

### DETAILED DESCRIPTION OF THE DRAWINGS

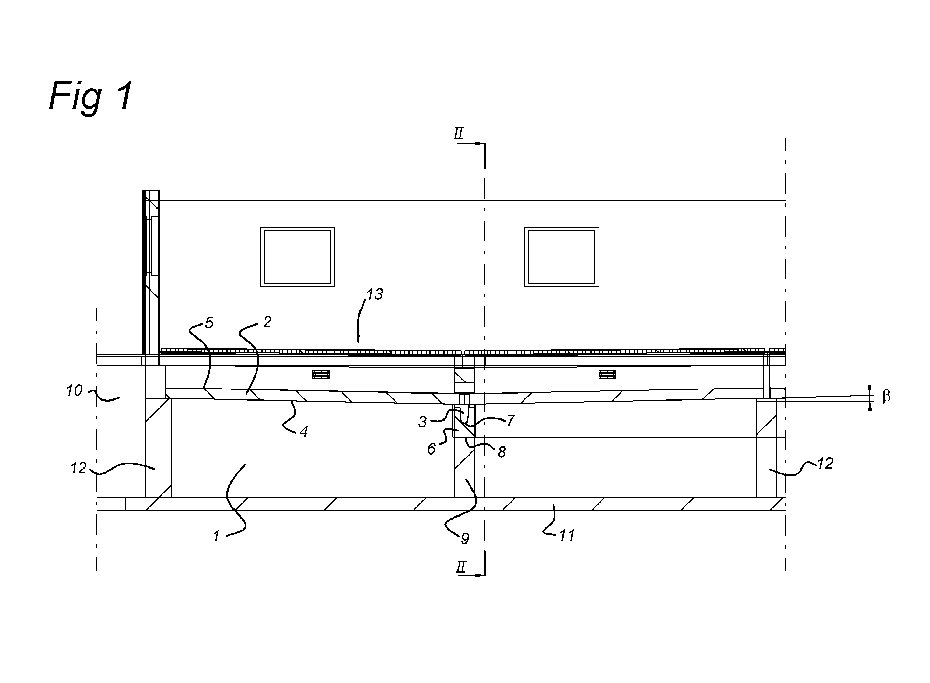

Figure 1 shows a cross-section of a part of a manure cellar 1 provided with floor parts 2 and a discharge channel 3 consisting of discharge channel parts 6 in cross-section. Said cross-section is along the longitudinal direction of the floor slabs 2 which on either side connect to a discharge channel 3. The lower side 4 of the floor slabs 2 is essentially level. At the one end the thickness is greater than on the side connecting to the discharge channel 3. In that way the upper side 5 of the floor slabs 2 is at a fall towards the discharge channel 3. The top surface is at an angle α to the lower surface of the floor slabs 2. The angle will in actual practice be small in order to prevent that the manure slides along into the channel. In one embodiment said angle will be between 1 and 5 degrees. In the embodiment shown said angle is between 1 and 3 degrees. The floor slabs will usually be 7-20 metres long and 1-5 metres wide. At the thickest head end the slabs usually are 10-20 cm thick and at the thinnest head end 8-15 cm thick.

The discharge channel 3 in this case is a simple channel having walls and a bottom 7. Said bottom is also at a fall, in this embodiment transverse to the fall of the floor slabs 2. The bottom 7 of the discharge channel 3 usually is at a fall of 0.3-2%. In this case the bottom 7 of the discharge channel 3 is at a fall of 0.4-0.7%. The lower side 8 of the discharge channel 3 usually is level. Preferably the discharge channel 3 is built up with discharge channel parts 6 of for instance 10 metres long. In one embodiment of said parts 6 the lower sides 8 connect in one plane. As a result they are easy to position on a bearing wall 9.

The manure cellar 1 is for the collection of the thick fraction of the manure, the thin fraction is collected in a separate reservoir 10. The manure cellar 1 has a cellar floor 11 and side walls 12 forming a boundary of the manure cellar 1. The floor slabs 2 support on the side walls 12. In this embodiment the manure cellar is provided below the floor slabs and discharge channel. It will be clear that in an alternative embodiment of the stable the floor slabs 2 can also form the actual stable floor.

For the collection of the manure and urine a walk-on grid 13 is provided over the floor slabs 2. Details of a walk-on grid 13 have been described in the Dutch patents mentioned earlier.

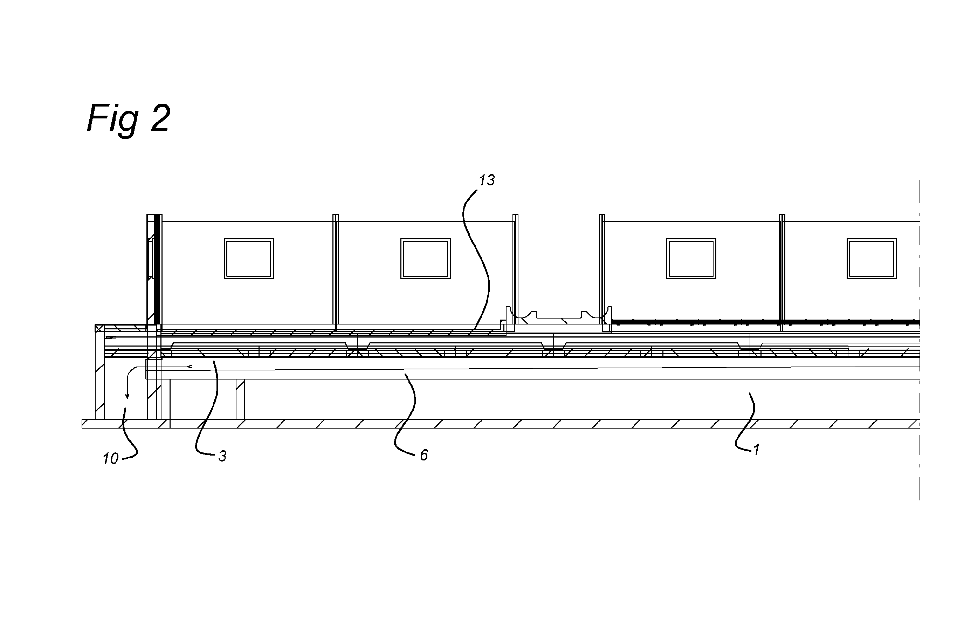

When pouring the concrete discharge channel parts 6 the lower sides 4 formed the upper side of the moulding material. By choosing for instance different moulds, or similar moulds each having a different insert piece, each consecutive discharge channel part 6 has channel positioned deeper than the previous one, so that when the discharge channel parts 6 with the lower side 8 are positioned in a plane with head ends connected, a continuous discharge channel has been formed which has a bottom 7 connected at a fall. This can be seen in figure 2 in the side view wherein the discharge channel is shown in dotted lines. The bottom of the channel has a width of 7-20 cm.

The floor slabs 2 at one outer end support on respective edges of the discharge channel 3. In order to realise a proper sealing between those edges and the discharge channel 3, the edge of the discharge channels may be provided with a slot that is filled with a permanently elastic strip, such as for instance a hydrophilic bentonite strip, for instance Bentorub®. The edges can then be provided with some mortar before the floor slabs 2 are arranged.

The floor slabs 2 can be coupled one to the other at the longitudinal sides by means of a so-called concave-convex connection so that the slabs can be connected to each other virtually seamless.

The surfaces of the discharge channel 3 and of the floor parts that contact the urine preferably are of B65 or B80 concrete. This concrete is described in Dutch standard VBT 1995, currently NEN 8005 or NEN EN 206-1. In order to make smoothly finished pre-shaped parts the parts are often poured of self-sealing concrete.

The self-sealing concrete usually comprises cement, a filler such as for instance fly ash or limestone flour. In addition a plasticizer is added. Then there will be question of a so-called third-generation self-sealing concrete. In this floor joist 4 and the supporters 2 such concrete is extremely suitable as due to the smooth and closed surface the urine and manure have relatively little influence.

In one embodiment a first layer of concrete that has a high resistance against urine, can be poured into a mould for forming the surface that will contact the urine. Subsequently the mould can be filled further with for instance the standard self-sealing concrete.

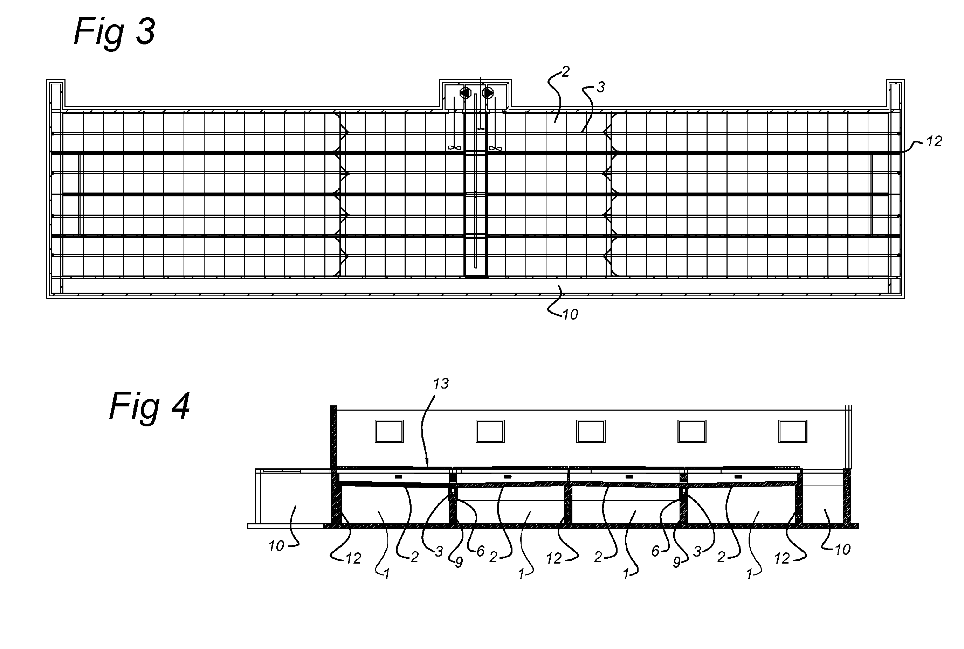

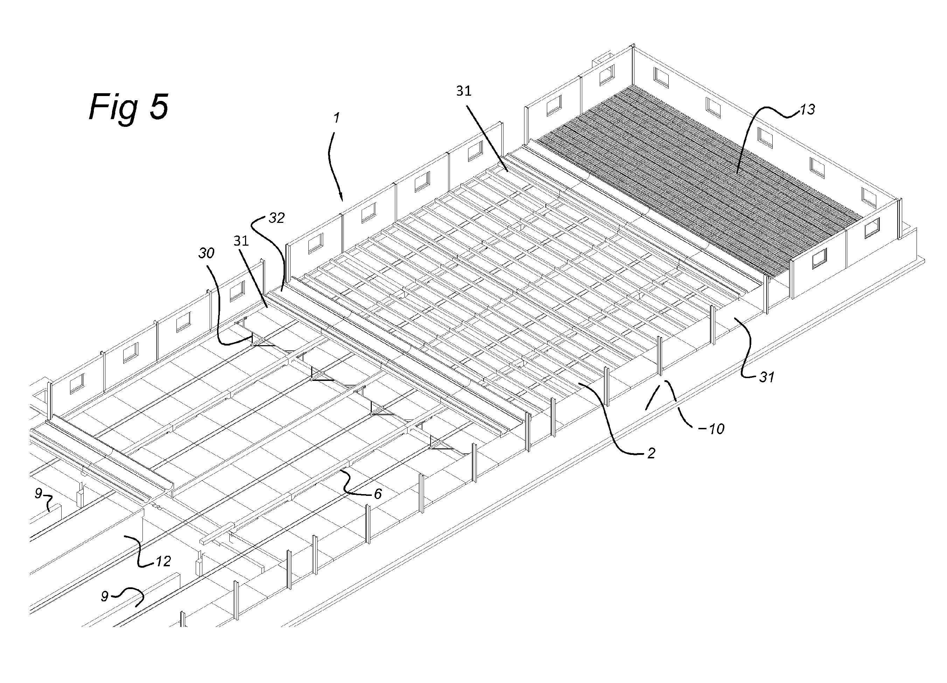

In figures 3-6 an overview is shown of the use of the floor parts 2 with discharge channel parts 6. The discharge channel 3 ends in a circumferential storage 10 for the urine and the thin liquid fraction. In figure 2 this had already been indicated by means of the arrow on the left. In figure 3 an embodiment of the stable is shown with the floor slabs 2 and discharge channel 3. Around the floor section with the floor slabs 2 and discharge channels 3 a circumferential reservoir 10 for the thin fraction, for instance urine, is arranged. In figure 5 a view in perspective of the stable of figure 3 is shown. At the outer right the stand-on floor 13 with grids is shown. As described they may for instance be grids as discussed in the Dutch patents mentioned earlier. More to the left only the supporting beams of the grids are still visible. The floor slabs 2 with discharge channels are positioned not far below the stand-on floor. In a further view further to the left the supporting beams of the stand-on floor have also been left out. Now manure scrapers 30 are visible. Said manure scrapers shove the solid fraction of the manure in the longitudinal direction of the stable towards an opening (31) between the floor slabs 2 so that the solid manure fraction drops into the manure cellar 1. The opening (31) can be realised in different ways. A simple possibility is to leave a space between the floor parts so that the manure is able to drop between the floor parts and into the manure cellar. Alternatively the floor parts may be provided with an opening or slit that may or may not be closable, through which the (more) solid manure can drop into the manure cellar. In one embodiment the open surface of the sum of the openings (31) is as small as possible so as to close off the manure from the outside world as quickly as possible. The opening (31) may for instance be arranged at every other set of floor parts. It may also be possible for instance to provide an opening or passage (31) at the outer ends of the stable. Said opening (31) as well may if so desired be closable. In case of fewer openings (31) for instance the manure pusher or manure scraper (30) may move reciprocally more often. In one embodiment the manure pusher (30) scrapes in one going direction over the floor slabs, and the manure pusher (30) is lifted from the floor slabs in the returning motion. In that way all manure is moved in one direction only.

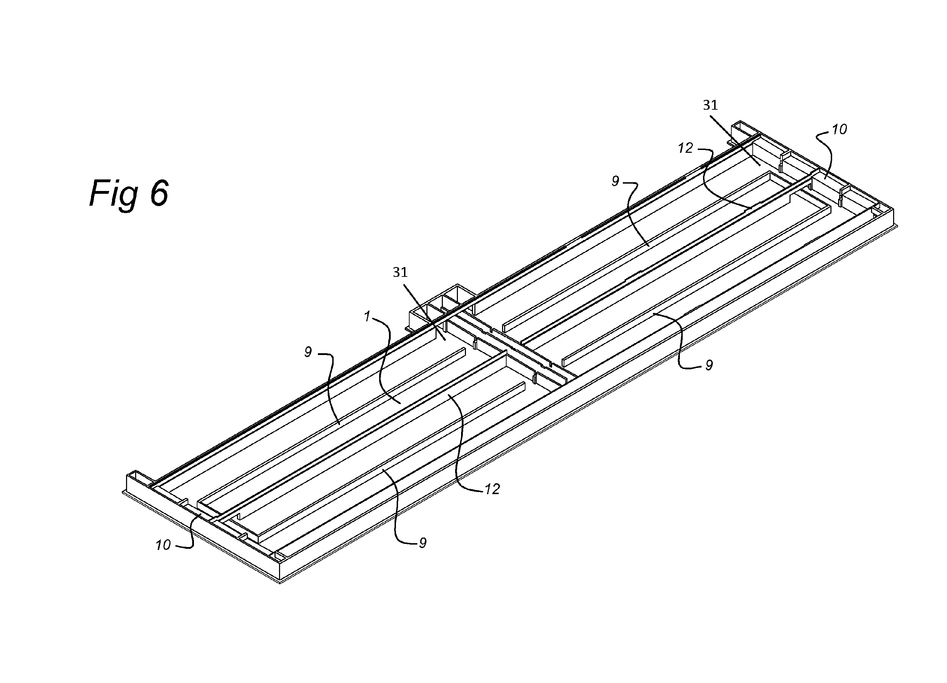

For that matter the manure cellar can partially be seen on the outer lefthand side of figure 5. An overall view can be seen in figure 6. Clear are the circumferential reservoir 10 for the thin fraction of the manure and the manure cellar 1 for the thick manure fraction. For moving the thick manure fraction a set of mixers is often provided in the manure cellar, as schematically shown in the top middle of figure 3.

It will be clear that the above description is included to illustrate the working of preferred embodiments of the invention and not to limit the scope of the invention. Starting from the explanation above many variations that fall within the spirit and scope of the present invention will be evident to an expert.

## Claims

1. Stable comprising a manure storage (1), a walk-on floor (13) provided with passages for manure and urine, and below the walk-on floor (13) a bottom floor comprising a series of concrete floor parts (2) and with a top surface (5) at a fall, and a concrete discharge channel (3) having side walls and a discharge channel bottom (7) at a fall, wherein the series of floor parts (2) with an edge connect to side walls of the discharge channel (3) so that on either side of the discharge channel (3) floor parts (2) at a fall slope down to the discharge channel (3), wherein the fall of the discharge channel (3) is transverse to the fall of the floor parts (2), wherein the discharge channel (3) ends in a reservoir (10) for a thin fraction of the manure that has been separated from the manure storage (1), wherein at a longitudinal side, transverse to the discharge channel (3), the bottom floor provides a passage for the solid fraction of the manure and its collection in the manure storage (1), and wherein the stable is furthermore provided with a manure scraper (30) for shoving the manure over the floor parts (2) towards the passage and into the manure storage (1).

2. Stable according to claim 1, wherein the manure storage comprises a manure cellar (1).

3. Stable according to claim 2, wherein the walk-on floor (13) is at least partially provided over the manure cellar (1).

4. Stable according to claim 2 or 3, wherein the floor parts at least partially form a ceiling for the manure cellar (1).

5. Stable according to any one of the preceding claims, wherein at a longitudinal side, transverse to the discharge channel (3), a space between two floor parts (2) provides a passage for the solid fraction of the manure and its collection in the manure cellar (1).

6. Stable according to any one of the preceding claims, wherein the floor parts comprise a first and second series of floor parts of prefab self-sealing concrete with, when in use, a substantially level lower side and a top surface at a fall with respect to the lower side.

7. Stable according to any one of the preceding claims, wherein the fall of the floor parts is 1-5 degrees, particularly 1-3 degrees, specifically 1.5-2.5 degrees.

8. Stable according to any one of the preceding claims, wherein the discharge channel is of prefab self-sealing concrete having side walls and a discharge channel bottom at a fall.

9. Stable according to any one of the preceding claims, wherein the fall of the channel bottom is 0.3-1.0%, particularly 0.4-0.6%.

10. Stable according to any one of the preceding claims, wherein at least two concrete channel parts connecting to the head end form a continuous channel at a fall and have a length of at least 10 metres, and wherein the channel parts have a connected, continuous lower side.

11. Stable according to any one of the preceding claims, wherein the floor parts are 7-20 meters long by 1-5 meters wide.

12. Stable according to any one of the preceding claims, wherein the discharge channel parts are 9-20 metres long , and/or the discharge channel has an inner width of 8-20 cm.

13. Stable according to any one of the preceding claims, wherein the stable comprises a stable wall bounding an interior space, and the reservoir and the manure storage are outside of the stable wall.

14. Floor part, particularly a floor part intended and suitable for the stable according to any one of the preceding claims, comprising a concrete slab having a length of at least 9 metres, a width of at least 1 metre, a substantially level lower side, an opposite upper side at a fall of 1-4 degrees with respect to the lower side, and wherein at least the upper side is provided with a layer of B65 concrete.

15. Discharge channel, particularly a discharge channel intended and suitable for a stable according to any one of the preceding claims, comprising at least two concrete channel parts connecting to the head end and forming a continuous channel at a fall and having a length of at least 10 metres, and wherein the channel parts have a connecting, continuous lower side, with the channel at a fall of between 0.2 and 2% with respect to the lower side, particularly the channel has a fall of between 0.4 and 1%.
